# EUROPÄISCHE PATENTANMELDUNG

(11) **EP 3 141 632 A1**
(43) Veröffentlichungstag der Anmeldung: **15.03.2017**
(21) Anmeldenummer: 15003571.5
(22) Anmeldetag: 15.12.2015
(51) Int. Cl.: C23C 24/08, C23C 24/04, B23K 20/227

(54) **VERFAHREN ZUM VERBINDEN VON WERKSTÜCKEN UND MIT DIESEM VERFAHREN HERGESTELLTE VERBINDUNGSSTÜCKE**

(30) Priorität: 11.09.2015 DE 102015011657
(71) Anmelder: Linde Aktiengesellschaft, 80331 München (DE)
(72) Erfinder: Krömmer, Werner, 84034 Landshut (DE); Hock, Martin, 81927 München (DE); Fatih, Savgu, 85757 Karlsfeld (DE); Lang, Florian, 85221 Dachau (DE)
(74) Vertreter: Gellner, Bernd

(57) **Zusammenfassung**

Die Erfindung betrifft ein Verfahren zum Fügen artverschiedener, nicht direkt miteinander verschweißbarer Werkstoffe (1, 2), bei dem durch thermisches Spritzen, insbesondere durch Kaltgasspritzen, eine Spritzschicht (3) hergestellt wird, die zumindest zum Teil die Oberfläche eines ersten Werkstücks (1) aus einem ersten Werkstoff (1) überdeckt, wobei die Art der Spritzschicht (3) so gewählt wird, dass sie mit dem ersten Werkstoff (1) über die physikalischen Kräfte und chemischen Vorgänge beim Auftrag der Spritzschicht (3) eine stoffschlüssige Verbindung eingeht, dadurch gekennzeichnet, dass zum Fügen der beiden Werkstücke (1, 2) der zweite Werkstoff (2) an die Spritzschicht (3) geschweißt wird. Desweiteren betrifft die vorliegende Erfindung ein Schweißverbindungsstück, das nach dem erfindungsgemäßen Verfahren hergestellt ist.

## Beschreibung

Die Erfindung betrifft ein Verfahren zum Fügen artverschiedener, nicht direkt miteinander verschweißbarer Werkstoffe, bei dem durch thermisches Spritzen, insbesondere durch Kaltgasspritzen, eine Spritzschicht hergestellt wird, die zumindest zum Teil die Oberfläche eines ersten Werkstücks aus einem ersten Werkstoff überdeckt, wobei die Art der Spritzschicht so gewählt wird, dass sie mit dem ersten Werkstoff über die physikalischen Kräfte und chemischen Vorgänge beim Auftrag der Spritzschicht eine stoffschlüssige Verbindung eingeht. In der industriellen Fertigung werden Verbindungen von Werkstücken oder Teilen unterschiedlichster Art und Geometrie benötigt. Die Anforderungen an die Eigenschaften der Verbindungen sind dabei unterschiedlich. Besondere Schwierigkeiten bereitet die Herstellung von Verbindungen von Werkstücken, die sich in der Geometrie und/ oder im Material stark unterscheiden.

Aus der DE-A-15 00 733 ist ein Verfahren zum unlöslichen Verbinden von nicht miteinander verschweißbaren Werkstoffteilen durch Beschichten mittels eines Draht- oder Pulverspritzverfahrens mit und ohne Schutzgasatmosphäre oder mittels eines Plasmaspritzverfahrens mit Schutzgasatmosphäre bekannt.

Aus der Druckschrift EP 0 911 423 B1 ist ein Verfahren zum Verbinden von Werkstücken mittel thermischem Spritzen bekannt.

Ein weiteres bekanntes Verfahren zum Fügen artverschiedener Werkstoffe ist das Sprengplattieren, wie es beispielsweise in der Druckschrift EP 1 154 218 B1 beschrieben ist.

Das thermische Spritzen zum Beschichten kennt als Verfahrensvarianten das autogene Flammspritzen oder das Hochgeschwindigkeits-Flammspritzen, das Lichtbogenspritzen, das Plasmaspritzen, das Detonationsspritzen und das Laserspritzen.

Thermische Spritzverfahren werden in allgemeiner Form beispielsweise in
- *Übersicht und Einführung in das "*Thermische Spritzen", Peter Heinrich, Linde-Berichte aus Technik und Wissenschaft, 52/1982, Seiten 29 bis 37,
   oder
- Thermisches Spritzen - Fakten und Stand der Technik, Peter Heinrich, Jahrbuch Oberflächentechnik 1992, Band 48, 1991, Seiten 304 bis 327, Metall-Verlag GmbH,
beschrieben.

Thermische Spritzverfahren zeichnen sich im wesentlichen dadurch aus, daß sie gleichmäßig aufgetragene Beschichtungen ermöglichen. Durch thermische Spritzverfahren aufgetragene Beschichtungen können durch Variation der Spritzmaterialien an unterschiedliche Anforderungen angepaßt werden. Die Spritzmaterialien können dabei in Form von Drähten, Stäben oder als Pulver verarbeitet werden. Beim thermischen Spritzen kann zusätzlich eine thermische Nachbehandlung vorgesehen sein.

Darüber hinaus wurde ein weiteres thermisches Spritzverfahren entwickelt, welches auch als Kaltgasspritzen bezeichnet wird. Es handelt sich dabei um eine Art Weiterentwicklung des Hochgeschwindigkeits-Flammspritzens mit Pulver. Dieses Verfahren ist beispielsweise in der europäischen Patentschrift EP 0 484 533 B1 beschrieben. Beim Kaltgasspritzen kommt ein Zusatzwerkstoff in Pulverform zum Einsatz. Die Pulverpartikel werden beim Kaltgasspritzen jedoch nicht im Gasstrahl geschmolzen. Vielmehr liegt die Temperatur des Gasstrahles unterhalb des Schmelzpunktes der Pulverpartikel des Zusatzwerkstoffes (EP 0 484 533 B1) oder aber nur in geringem Maße oberhalb der Schmelztemperatur des Pulvers. Im Kaltgasspritzverfahren wird also ein im Vergleich zu den herkömmlichen Spritzverfahren "kaltes" bzw. ein vergleichsweise kälteres Gas verwendet. Gleichwohl wird das Gas aber ebenso wie in den herkömmlichen Verfahren erwärmt, aber lediglich auf Temperaturen unterhalb des Schmelzpunktes der Pulverpartikel des Zusatzwerkstoffes oder auf Temperaturen des Gasstrahles von 100 K bis zu 200 K oberhalb des Schmelzpunktes der Pulverpartikel des Zusatzwerkstoffes.

Der vorliegenden Erfindung liegt die Aufgabe zugrunde, ein Verfahren zum Fügen von Werkstücken aufzuzeigen, welches das Verbinden von Werkstücken vereinfacht, verbilligt oder überhaupt erst ermöglicht. Insbesondere sollte ein Verbinden von sich in der Geometrie und/oder im Material stark unterscheidenden (hinsichtlich der Materialzusammensetzung wie auch hinsichtlich der Materialeigenschaften) Werkstücken ermöglicht werden.

Die gestellte Aufgabe wird dadurch gelöst, daß zum Fügen der beiden Werkstücke der zweite Werkstoff an die Spritzschicht geschweißt wird.

Ein wesentliches Merkmal der Erfindung besteht darin, daß der Zusatzwerkstoff, aus dem die Spritzschicht hergestellt wird, in Pulverform vorliegt.

Besonders bevorzugt wird das Kaltgasspritzen als thermisches Spritzverfahren eingesetzt, wobei im Gegensatz zum herkömmlichen Sprengplattieren beliebig dünne Spritzschichten aufgebracht werden können, wodurch Werkstoffkosten und Resourcen gespart werden können.

Es können mittels des erfindungsgemäßen Verfahrens Werkstücke aus unterschiedlichen Werkstoffen verbunden werden. Die unterschiedlichen Werkstoffe können dabei sein:
- Metalle oder Metallegierungen mit sehr unterschiedlichem Schmelzpunkt,
- Metalle oder Metallegierungen mit unterschiedlicher Wärmeleitfähigkeit oder unterschiedlichem Wärmeausdehnungsverhalten,
- Metalle oder Metallegierungen, die beim gemeinsamen Aufschmelzen und der damit verbundenen Durchmischung anschließend beim Abkühlen spröde intermetallische Phasen bilden, welche die Festigkeit der Verbindung beeinflussen,
- Metall-Keramikverbindungen.

Beispiele für Kombinationen von erstem und zweiten Werkstoff:
Beispiel 1: Alle schwarz-weiß-Verbindungen nicht direkt schweißbarer Werkstoffe;
Beispiel 2: Jegliche Art von Aluminium-Stahl-Verbindungen, wie sie z.B. im Schiffsbau verwendet werden;
Beispiel 3: Eine Verbindung von Aluminium und einem CrNi-Werkstoff;
Beispiel 4:Eine Verbindung von AlMg4,5 und Stahl;
Beispiel 5: Eine Verbindung von AlMg4,5 und Edelstahl;
Beispiel 6: Eine Verbindung von AlMg4,5 und Stahl mit Hilfe einer Spritzschicht aus Nickel oder einer Nickellegierung;
Beispiel 7: Eine Verbindung von AlMg4,5 und Edelstahl mit Hilfe einer Spritzschicht aus Nickel oder einer Nickellegierung;
Beispiel 8: Eine Verbindung von AlMg4,5 und Stahl mit Hilfe einer Sandwich-Spritzschicht aufweisend eine Ti / Cu-Schicht und eine Ni-Schicht;
Beispiel 9: Eine Verbindung von AlMg4,5 und Edelstahl mit Hilfe einer Sandwich-Spritzschicht aufweisend eine Ti / Cu-Schicht und eine Ni-Schicht.

Abhängig von der Art des ersten und zweiten Werkstoffs wird eine geeignete Zusammensetzung der Spritzschicht ausgewählt, zum Beispiel aus der Gruppe von Nickel-, Titan-, Wolfram- oder Kupferwerkstoffen.

Ferner können sich die zu verbindenden Werkstücke hinsichtlich ihrer Geometrie stark unterscheiden. So kann das erfindungsgemäße Verfahren beispielsweise für das Befestigen von Stegen oder Versteifungen bei insbesondere dünnwandigen Konstruktionen mit Vorteil eingesetzt werden.

Für die überwiegende Zahl der Anwendungen wird es in der Regel genügen, daß lediglich eine Spritzschicht hergestellt wird. Es können aber auch zwei oder mehrere Spritzschichten aufgetragen werden. Dies ist beispielsweise für erste aufgespritzte Schichten sinnvoll, die eine besonders hohe Haftfestigkeit und/oder eine besonders gute Haftung auf beiden Werkstücken besitzen oder bei denen der Werkstoff einen dem Material des Werkstückes angenäherten thermischen Ausdehnungskoeffizienten besitzt. Derartige erste Spritzschichten sind beispielsweise von Bedeutung, wenn eines der zu verbindenden Werkstücke aus Glas oder Keramik besteht und die Verbindung Temperaturwechseln ausgesetzt werden soll. Ausführungen zur erfindungsgemäßen Herstellung einer Spritzschicht gelten entsprechend auch für Fälle mit mehreren Spritzschichten.

In jedem Fall entsteht auf die beschriebene Art und Weise ein Werkstückverbund aus einem ersten Werkstück und einem zweiten Werkstück mit einer Verbindung zwischen beiden Werkstücken aus einer durch thermisches Spritzen erzeugten Spritzschicht oder aus mehreren durch thermisches Spritzen erzeugten Spritzschichten, welche zumindest teilweise eine Oberfläche des ersten Werkstückes und zumindest teilweise eine Oberfläche des zweiten Werkstückes überdeckt bzw. überdecken.

Die Angabe, daß die Pulverpartikel des Zusatzwerkstoffes im Gasstrahl nicht geschmolzen werden, soll im Rahmen der vorliegenden Erfindung auch bedeuten, daß die Partikel im Gasstrahl im wesentlichen nicht angeschmolzen werden. Dies kann dadurch sichergestellt werden, daß die Temperatur des Gasstrahles unterhalb des Schmelzpunktes der Pulverpartikel des Zusatzwerkstoffes liegt. Aber selbst bei Temperaturen des Gasstrahles von 100 K bis zu 200 K oberhalb des Schmelzpunktes der Pulverpartikel des Zusatzwerkstoffes kann aufgrund der extrem kurzen Verweilzeit der Partikel im Gasstrahl im Bereich von Millisekunden ein Schmelzen oder auch ein Anschmelzen der Pulverpartikel verhindert werden. Die Bedeutung der höheren Gastemperaturen bzw. der Vorteil der Erwärmung des Gases liegt darin, daß in heißeren Gasen die Schallgeschwindigkeit höher ist und dadurch auch die Partikelgeschwindigkeit vergleichsweise größer wird.

Das Kaltgasverfahren besitzt gegenüber herkömmlichen Verfahren des thermischen Spritzens eine Reihe von Vorteilen. Die thermische Einwirkung und Kraftwirkung auf die Oberfläche des Substratwerkstoffes ist verringert, wodurch ungewollte Veränderungen der Materialeigenschaften des Substratwerkstoffes verhindert oder zumindest merklich verringert werden können. Ebenso können weitgehend Änderungen in der Struktur des Substratwerkstoffes unterbunden werden. Die mit dem Kaltgasspritzverfahren erzeugten Schichten besitzen keine oder zumindest keine ausgeprägte Textur, d.h. es gibt keine Vorzugsorientierung der einzelnen Körner oder Kristalle. Das Substrat wird ferner nicht durch eine Flamme oder ein Plasma erwärmt, so daß keine oder nur extrem geringe Veränderungen am Grundkörper und auch kein Verzug von Werkstücken durch Wärmespannungen infolge des thermischen Spritzens auftreten.

Es hat sich gezeigt, daß die zahlreichen verfahrenstechnischen Möglichkeiten des thermischen Spritzens nach dem Kaltgasverfahren für das Verbinden von Werkstücken genutzt werden können. Durch die Möglichkeiten der Verwendung unterschiedliche Pulvermaterialien und Pulvermischungen eröffnet sich eine breite Palette für Werkstückverbindungen.

Durch das Kaltgasspritzverfahren ist es vorteilhafterweise möglich, Spritzschichten herzustellen, deren Eigenschaften sehr nahe an den Werkstoffeigenschaften der vergleichbaren massiven Werkstoffe sind, aus denen das verwendete Spritzpulver hergestellt ist. Daher eignet sich Kaltgasspritzen auch sehr gut als Verfahren für additive Fertigung.

Die Qualität der Verbindung im Bereich der Fügezone, die durch Kaltgasspritzen hergestellt wird, ist vergleichbar mit der Qualität einer durch Sprengplattieren hergestellten Verbindung.

Erfindungsgemäß kann das Gas für das thermische Spritzen Stickstoff, Helium, Argon, Neon, Krypton, Xenon, ein Wasserstoff enthaltendes Gas, ein kohlenstoffhaltiges Gas, insbesondere Kohlendioxid, Sauerstoff, ein Sauerstoff enthaltendes Gas, Luft, Wasserdampf oder Mischungen der vorgenannten Gase enthalten. Neben den aus der EP 0 484 533 B1 bekannten Gasen Luft und/oder Helium eignen sich auch für das den pulverförmigen Zusatzwerkstoff tragende Gas ein Stickstoff, Argon, Neon, Krypton, Xenon, Sauerstoff, ein Wasserstoff enthaltendes Gas, ein kohlenstoffhaltiges Gas, insbesondere Kohlendioxid, Wasserdampf oder Mischungen der vorgenannten Gase und Mischungen dieser Gase mit Helium. Der Anteil des Helium am Gesamtgas kann bis zu 90 Vol.-% betragen. Bevorzugt wird ein Heliumanteil von 10 bis 50 Vol.-% im Gasgemisch eingehalten.

Es hat sich gezeigt, daß durch den Einsatz von unterschiedlichen Gasen zum Beschleunigen und Tragen des pulverförmigen Zusatzwerkstoffes die Flexibilität und Wirksamkeit des Verfahrens wesentlich vergrößert werden kann. Die so hergestellten Schichten haften sehr gut auf den verschiedensten Substratwerkstoffen, beispielsweise auf Metall, Metallegierungen, Keramik, Glas, Kunststoffe und Verbundwerkstoffe. Die mit dem erfindungsgemäßen Verfahren hergestellten Beschichtungen sind von hoher Güte, weisen eine außerordentlich geringe Porösität auf und besitzen extrem glatte Spritzoberflächen, so daß sich in der Regel eine Nacharbeitung der Verbindung erübrigt.

Die erfindungsgemäß eingesetzten Gase besitzen eine ausreichende Dichte und Schallgeschwindigkeit, um die erforderlichen hohen Geschwindigkeiten der Pulverpartikel gewährleisten zu können. Das Gas kann dabei inerte und/oder reaktive Gase enthalten. Mit den genannten Gasen ist die Herstellung von sehr dichten und besonders gleichmäßigen Beschichtungen möglich, welche sich außerdem durch ihre Härte und Festigkeit auszeichnen. Die Schichten weisen extrem geringe Oxidgehalte auf. Sie besitzen keine oder zumindest keine ausgeprägte Textur, d.h. es gibt keine Vorzugsorientierung der einzelnen Körner oder Kristalle. Das Substrat wird ferner beim Kaltgasspritzen nicht durch eine Flamme oder ein Plasma erwärmt, so daß keine oder nur extrem geringe Veränderungen am Grundkörper und auch kein Verzug von Werkstücken durch Wärmespannungen infolge des thermischen Spritzens auftreten.

Mit besonderem Vorteil kann die Spritzschicht mehrlagig ausgebildet sein. Die Spritzschichten können geschlossen, linienförmig oder als Struktur auf dem (Grund)Werkstoff aufgebracht werden.

Das erste und zweite Werkstück kann z.B. rohrförmig, gerade, gebogen oder gewölbt ausgefürt sein.

Gemäß einer vorteilhaften Weiterbildung der vorliegenden Erfindung wird die Spritzschicht aus mehreren, insbesondere aus zwei, drei oder vier, schichtweise aufgebrachten und sich voneinander in der Zusammensetzung unterscheidenden Zusatzwerkstoffen gebildet. eine so ausgebildete Spritzschicht kann auch als Mehrlagenschichtsystem bezeichnet werden. Es können somit unterschiedliche Zusatzwerkstoff-Kombinationen in den jeweils minimal geforderten Schichtdicken hergestellt werden. Die Dicke der Spritzschicht kann bis zu mehreren Millimetern betragen. Der oder die Werkstoffe, aus denen die Spritzschicht besteht, werden hier als Zusatzwerkstoffe bezeichnet, im Gegensatz zum den ersten und zweiten Werkstoffen, aus denen die zu verbindenden Werkstücke gefertigt sind, welche man auch als Grund- oder Massivwerkstoffe bezeichnen kann.

Mit besonderem Vorteil wird der erste Werkstoff aus der Gruppe von Aluminium-, Titan-, Magnesium- oder Kupferwerkstoffen ausgewählt.

Mit besonderem Vorteil wird der zweite Werkstoff aus der Gruppe von Stahl- oder Edelstahlwerkstoffen ausgewählt wird.

Der oder die Zusatzwerkstoffe, aus denen die Spritzschicht gebildet wird, wird gemäß den in Anspruch 1 beschriebenen Anforderungen an Haftung an den ersten Werkstoff und Verschweißbarkeit mit dem zweiten Werkstoff ausgewählt.

In Ausgestaltung der Erfindung berühren sich die zu verbindenden Werkstücken an der Verbindungsstelle beim Aufbringen der Spritzschicht bzw. der Spritzschichten. Im so hergestellten Werkstückverbund stehen die verbundenen Werkstücke unterhalb der Spritzschicht bzw. der Spritzschichten in unmittelbarem Kontakt.

Nach einer anderen Ausgestaltung der Erfindung sind die zu verbindenden Werkstücke an der Verbindungsstelle beim Aufbringen der Spritzschicht bzw. der Spritzschichten mit einem Abstand zueinander angeordnet und durch das thermische Spritzen wird der Zwischenraum an der Verbindungsstelle gefüllt. Im Werkstückverbund befindet sich also zwischen den verbundenen Werkstücken ein mit dem gespritzten Zusatzwerkstoff oder Zusatzwerkstoffen gefüllter Zwischenraum.
Mit Vorteil kann neben dem Zwischenraum an der Verbindungsstelle auch der angrenzende Oberflächenbereich der Werkstücke beschichtet werden.

Der Gasstrahl kann auf eine Temperatur im Bereich zwischen 30 und 800 °C erwärmt werden, wobei alle bekannten pulverförmigen Spritzmaterialien eingesetzt werden können. Die Erfindung eignet sich insbesondere für Spritzpulver aus Metallen, Metalllegierungen, Hartstoffen, Keramiken und/oder Kunststoffen.

In Ausgestaltung des erfindungsgemäßen Verfahrens wird die Temperatur des Gasstrahles im Bereich zwischen 300 und 500 °C gewählt. Diese Gastemperaturen eignen sich insbesondere für den Einsatz von reaktiven Gasen oder reaktiven Gasbestandteilen. Als reaktive Gas oder Gasbestandteile sind insbesondere Wasserstoffzumischungen, kohlenstoffhaltige Gase oder stickstoffhaltige Gase zu erwähnen.

Erfindungsgemäß wird ein Gasstrahl mit einem Druck von 21 bis 50 bar eingesetzt. Vor allem das Arbeiten mit höheren Gasdrücken bringt zusätzliche Vorteile, da die Energieübertragung in Form von kinetischer Energie erhöht wird. Hervorragende Spritzergebnisse wurden beispielsweise mit Gasdrücken von etwa 35 bar erzielt.

Im erfindungsgemäßen Verfahren können die Pulverpartikel auf eine Geschwindigkeit von 300 bis 1600 m/s beschleunigt werden. Im erfindungsgemäßen Verfahren eignen sich dabei insbesondere Geschwindigkeiten der Pulverpartikel zwischen 1000 und 1600 m/s, besonders bevorzugt zwischen 1250 und 1600 m/s, da in diesem Fall die Energieübertragung in Form von kinetischer Energie besonders hoch ausfällt.

Die im erfindungsgemäßen Verfahren eingesetzten Pulver besitzen bevorzugt Partikelgrößen von 1 bis 100 µm.

Zur Durchführung des erfindungsgemäßen Verfahrens können alle geeigneten Vorrichtungen eingesetzt werden, insbesondere gilt dies für die in der EP 0 484 533 B1 beschriebene Vorrichtung.

Die Erfindung bietet eine ganze Reihe von Vorteilen, von denen hier nur einige wenige nochmal erwähnt werden sollen: Die Erfindung ermöglicht eine einfache und kostengünstige Herstellung von Schweißverbindungsstücken sowie eine kompaktere Bauweise und Reduzierung von Verschnitt, der bei einer herkömmlichen Fertigung von Verbindungsstücken aus Platten anfallen würde. Beim Aufbringen der Spritzschicht mittels Kaltgasspritzen findet kein unerwünschter Wärmeeintrag in das erste Werkstück statt. Der Haftmechanismus und die Haftqualität der Spritzschicht zum ersten Werkstück ist vergleichbar mit einer geschweißten Verbindung (s. hierzu auch "Kaltgasspritzen - Eine Analyse des Materialverhaltens" von Dr. Tobias Schmidt, Dissertation vorgelegt an der Helmut-Schmidt-Universität Hamburg, 7. Mai 2007).

Weitere Vorteile können erreicht werden, wenn man die Spritzschicht als Konstruktionselement betrachtet. Der Auftrag der Spritzschicht kann in Dicke und Form gezielt erfolgen, die Spritzschicht erhält exakte Grenzen, ohne das Abdeckungen zum nicht zu beschichtenden Teil der Oberfläche des Werkstücks nötig sind.

Die Erfindung sowie weitere Einzelheiten der Erfindung werden im folgenden anhand von in den Zeichnungen dargestellten Ausführungsbeispielen näher erläutert.

### Hierbei zeigen:

- Figur 1: eine erfindungsgemäß hergestellte Verbindung zweier Rohre mit überlappender Spritzschicht;
- Figur 2: eine andere erfindungsgemäß hergestellte Verbindung zweier Rohre mit unterschiedlichem Durchmesser;
- Figur 3: eine andere erfindungsgemäß hergestellte Verbindung zweier Werkstücke mit einem aufgespritzten Mehrlagenschichtsystem (gezeigt sind zwei Lagen).

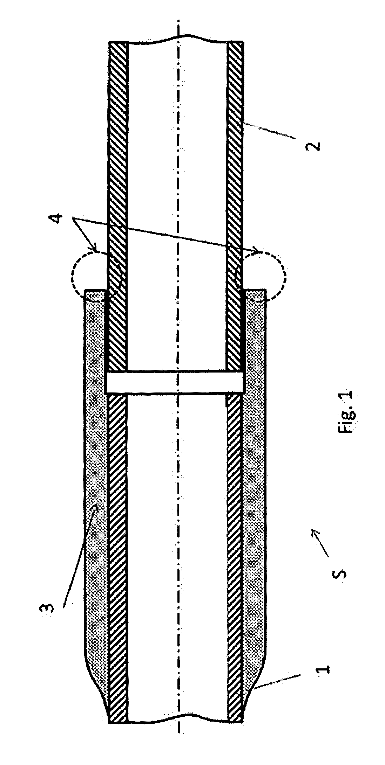

In Figur 1 ist ein Werkstückverbund zweier Rohre 1 und 2, beispielsweise aus unterschiedlichen Werkstoffen, dargestellt. Die aufgebrachte Spritzschicht 3 überdeckt im Verbindungsbereich die Oberfläche des ersten Rohres 1 und die Oberfläche des zweiten Rohres 2. Die Spritzschicht 3 und damit die Rohrverbindung erstreckt sich über den ganzen Rohrumfang. In diesem Ausführungsbeispiel wird die Spritzschicht 3 auf Teile der Oberfläche des ersten Werkstücks 1 und des zweiten Werkstücks 2 aufgebracht, wobei die Spritzschicht 3 mit den beiden Werkstücken 1 und 2 auf unterschiedliche Weise verbunden wird: Die Spritzschicht 3 verbindet sich mit dem ersten Werkstück 1 stoffschlüssig durch das Kaltgasspritzen und wird mit dem zweiten Werkstück 2 verschweißt. Die Schweißnaht 4 ist in der Figur 1 mit einem Kreis symbolisch dargestellt. Das Bezugszeichen S kennzeichnet das erfindungsgemäße Schweißverbindungsstück als Ganzes.

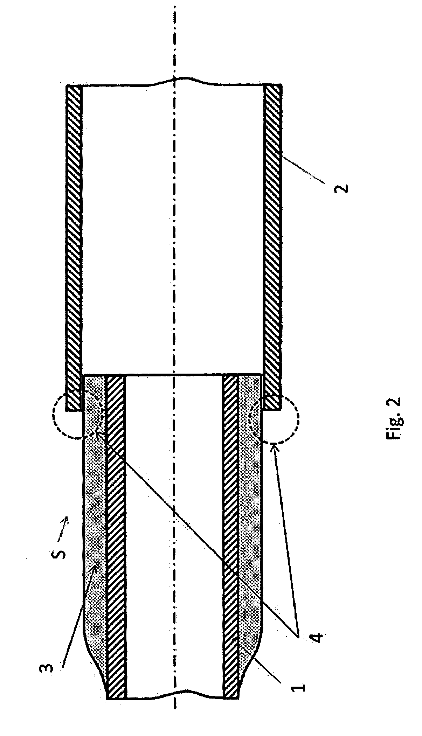

Figur 2 zeigt eine andere erfindungsgemäß hergestellte Verbindung zweier Rohre 1 und 2 mit unterschiedlichem Durchmesser. Hier überlappt das Werkstück 2 die Spritzschicht 3. Die Art der Verbindungen ist ansonsten analog zum dem Ausführungsbeispiel gemäß Figur 1.

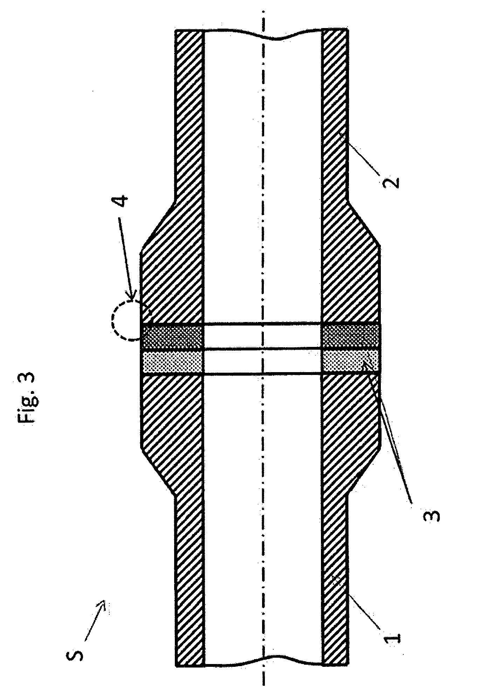

Figur 3 zeigt eine andere erfindungsgemäß hergestellte Verbindung zweier Werkstücke 1 und 2 mit einem aufgespritzten Mehrlagenschichtsystem 3 (gezeigt sind zwei Lagen). Hier ist der Vorteil, dass die direkt mit dem ersten Wersktoff 1 verbundene Lage (z.B. eine Ti / Cu-Schicht) besser am ersten Werkstoff 1 (z.B. AlMg4,5) haftet und sich die zweite Lage (z.B. eine Ni-Schicht) besser mit dem zweiten Werkstoff 2 (z.B. Stahl) verschweißen lässt. Die in Klammern gesetzten (Zusatz)werkstoffe sollen hier lediglich als ein Beispiel für eine erfolgreiche Kombination unter vielen angeführt werden. Die zweite Lage des Mehrlagenschichtsystems 3 haftet ebenfalls über den durch das Kaltgasspritzen erzeugten Haftmechanismus an der ersten Lage.

## Patentansprüche

1. Verfahren zum Fügen artverschiedener, nicht direkt miteinander verschweißbarer Werkstoffe (1, 2), bei dem durch thermisches Spritzen, insbesondere durch Kaltgasspritzen, eine Spritzschicht (3) hergestellt wird, die zumindest zum Teil die Oberfläche eines ersten Werkstücks (1) aus einem ersten Werkstoff (1) überdeckt, wobei die Art der Spritzschicht (3) so gewählt wird, dass sie mit dem ersten Werkstoff (1) über die physikalischen Kräfte und chemischen Vorgänge beim Auftrag der Spritzschicht (3) eine stoffschlüssige Verbindung eingeht, **dadurch gekennzeichnet, dass** zum Fügen der beiden Werkstücke (1, 2) der zweite Werkstoff (2) an die Spritzschicht (3) geschweißt wird.

2. Verfahren nach Anspruch 1, **dadurch gekennzeichnet, dass** die Spritzschicht (3) mehrlagig ausgebildet wird.

3. Verfahren nach Anspruch 1 oder 2, **dadurch gekennzeichnet, dass** die Spritzschicht (3) aus mehreren, insbesondere aus zwei, drei oder vier, schichtweise aufgebrachten und sich voneinander in der Zusammensetzung unterscheidenden Zusatzwerkstoffen gebildet wird.

4. Verfahren nach einem der vorstehenden Ansprüche, **dadurch gekennzeichnet, dass** der erste Werkstoff (1) aus der Gruppe von Aluminium-, Titan-, Magnesium- oder Kupferwerkstoffen ausgewählt wird.

5. Verfahren nach einem der vorstehenden Ansprüche, **dadurch gekennzeichnet, dass** der zweite Werkstoff (2) aus der Gruppe von Stahl- oder Edelstahlwerkstoffen ausgewählt wird.

6. Verfahren nach Anspruch 1, **dadurch gekennzeichnet, dass** sich die zu verbindenden Werkstücken (1, 2) an der Verbindungsstelle beim Aufbringen der Spritzschicht (3) berühren.

7. Verfahren nach Anspruch 1, **dadurch gekennzeichnet, dass** die zu verbindenden Werkstücken (1, 2) an der Verbindungsstelle beim Aufbringen der Spritzschicht (3) mit einem Abstand zueinander angeordnet sind und durch das thermische Spritzen der Zwischenraum an der Verbindungsstelle gefüllt wird.

8. Verfahren nach Anspruch 3, **dadurch gekennzeichnet, dass** neben dem Zwischenraum an der Verbindungsstelle auch der angrenzende Oberflächenbereich der Werkstücke (1, 2) beschichtet wird.

9. Verfahren nach einem der Ansprüche 1 bis 4, **dadurch gekennzeichnet, dass** die Temperatur des Gasstrahles beim thermischen Spritzen im Bereich zwischen 30 und 800 °C liegt.

10. Verfahren nach einem der Ansprüche 1 bis 5, **dadurch gekennzeichnet, dass** die Pulverpartikel beim thermischen Spritzen auf eine Geschwindigkeit von 300 bis 1600 m/s beschleunigt werden.

11. Schweißverbindungsstück (S), **dadurch gekennzeichnet, dass** es mit dem Verfahren nach einem der Ansprüche 1 bis 10 gefertigt ist.

12. Schweißverbindungsstück (S) nach Anspruch 11, **dadurch gekennzeichnet, dass** es einen ersten Werkstoff (1), einen davon artverschiedenen, nicht direkt mit dem ersten Werkstoff (1) verschweißbaren zweiten Werkstoff (2), eine Spritzschicht (3), die mit dem ersten Werkstoff (1) stoffschlüssig verbunden ist, und eine Schweißnaht (4) aufweist, durch die die Spritzschicht (3) und der zweite Werkstoff (2) verbunden bzw. gefügt sind.
